# EUROPEAN PATENT SPECIFICATION

(11) **EP 3 643 524 B1**
(45) Date of publication and mention of the grant of the patent: **22.06.2022**
(21) Application number: 18821609.7
(22) Date of filing: 05.03.2018
(51) Int. Cl.: B60C 11/03, B60C 9/20, B60C 9/28

(54) **HEAVY-LOAD TIRE**
SCHWERLASTREIFEN
PNEU POUR CHARGES LOURDES

(30) Priority: 22.06.2017 JP 2017122196
(43) Date of publication of application: 29.04.2020
(73) Proprietor: Bridgestone Corporation, Tokyo 104-8340 (JP)
(72) Inventor: HASEGAWA Tomoo, Tokyo 104-8340 (JP)
(74) Representative: Oxley, Robin John George
(86) International application number: PCT/JP2018/008238
(87) International publication number: WO 2018/235345

(56) References cited:
- EP-A1- 2 886 371
- WO-A1-2016/013605
- WO-A1-2016/067945
- JP-A- H07 144 509
- JP-A- 2001 171 312
- JP-A- 2011 235 854
- JP-A- 2013 119 306
- JP-A- 2015 116 977
- JP-A- 2017 019 365
- JP-A- 2017 030 416

## Description

### [Technical Field]

The present invention relates to a heavy load tire.

### [Background Art]

Generally, when a tire rotates, force in a tire rotation direction (driving force) is generated in a region adjacent to a tire equatorial line and force in a direction opposite to the tire rotation direction (braking force) is generated in a region adjacent to an end portion in a tire width direction. Thus, shear force is generated in a region around a boundary between both of the regions described above. A block is deformed by the shear force when the tire rotates, and thereby a wear amount at a step-in end is decreased and a wear amount at a kick-out end is increased. That is, uneven wear is generated at the kick-out end.

In order to suppress the uneven wear, a tire disclosed in Patent Literature 1 has a bottom raised portion formed in a part of a lug groove, and a thin groove formed between the bottom raised portion and a land portion adjacent to the bottom raised portion. Further, in the tire disclosed in Patent Literature 1, as a height H1 is defined by a height of a tread at a kick-out end side and a height H2 is defined by a height of the tread at a step-in end side, a height from a groove bottom to a top of the bottom raised portion is formed to fulfill H1 > H2. With this, uneven wear resistance at the kick-out end side is improved.

### [Citation List]

### [Patent Literature]

[PTL 1] Japanese Unexamined Patent Application Publication No. 2013-233834.

Other relevant prior art is known from WO 2016/013605 A1 and EP 2 886 371 A1.

### [Summary of Invention]

### [Problems to be Solved by the Invention]

Lateral force is applied to the block when turning, and the shear force is increased due to the lateral force. Consequently, the block at the kick-out end side is worn unevenly. However, Patent Literature 1 does not consider this problem.

Accordingly, an object of the present invention is, in consideration of the problem described above, to provide a heavy load tire capable of improving uneven wear resistance by decreasing a component of lateral force in shear force.

### [Means for Solving the Problems]

According to a first aspect of the present invention, there is a heavy load tire as defined in claim 1.

Further, in the first aspect, at least one of the lateral grooves is inclined toward the tire rotation direction, from the side of the tire equatorial line to the outer side in the tire width direction.

Further, in the first aspect, the heavy load tire further includes a first shoulder groove opened to a tread end and extended along the tire width direction. The second circumferential direction groove is communicated with the first shoulder groove.

Further, in the first aspect, the first shoulder groove is communicated with at least one of the lateral grooves.

Further, in the first aspect, the heavy load tire further includes a second shoulder groove communicated with a portion of the second circumferential direction groove between one end and another end of the second circumferential direction groove. The second shoulder groove is inclined toward the direction opposite to the tire rotation direction, from the side of the tire equatorial line to the outer side in the tire width direction.

Further, in the first aspect, as a length W is defined by a length between one end and another end of tread ends in the tire width direction, a length L1 is defined by a length between the tire equatorial line and one end of the second circumferential direction groove, and a length L2 is defined by a length between the tire equatorial line and another end of the second circumferential direction groove, the length L1 is 0.25W or more and less than 0.4W, and the length L2 is more than the length L1 and less than 0.4W.

Further, in the first aspect, the belt layer having the smallest angle is a first belt layer formed at an innermost side in a tire radial direction, or a second belt layer formed next to the first belt layer at an outer side in the tire radial direction. The first belt layer or the second belt layer is smaller in a width in the tire width direction than other belt layer.

### [Effects of the Invention]

According to the present invention, the uneven wear resistance is increased by decreasing the component of the lateral force in the sear force.

### [Brief Description of Drawings]

[Fig. 1] Fig. 1 is a cross-sectional view in a tire width direction along a tire radial direction illustrating a heavy load tire according to an embodiment of the present invention.
[Fig. 2] Fig. 2 is a view illustrating a belt configuration of the heavy load tire according to the embodiment of the present invention.
[Fig. 3] Fig. 3 is a plane view illustrating a tread surface of the heavy load tire according to the embodiment of the present invention.
[Fig. 4] Fig. 4(a) and Fig. 4(b) are views for describing a difference between a configuration with a curve groove and a configuration without a curve groove.
[Fig. 5] Fig. 5 is a plane view illustrating the tread surface of a heavy load tire not forming part of the present invention.
[Fig. 6] Fig. 6 is a plane view illustrating the tread surface of the heavy load tire according to the embodiment of the present invention.

### [Description of Embodiment]

Hereinafter, an embodiment of the present invention will be described with reference to the drawings. The same reference signs are assigned to the same parts in the drawings and the description thereof is therefore omitted.

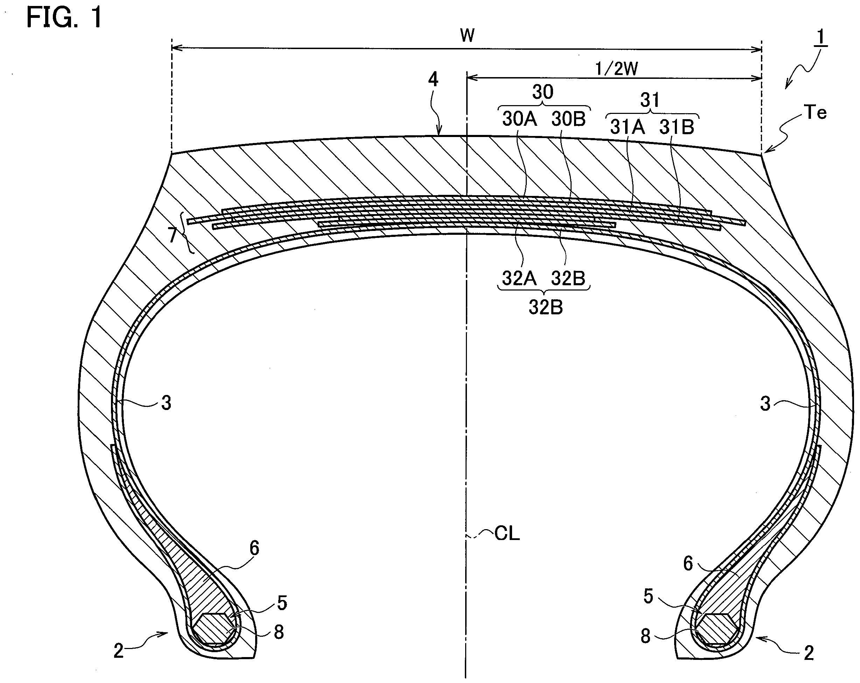

A configuration of a heavy load tire 1 according to the present embodiment will be described with reference to Fig. 1. The heavy load tire 1 according to the present embodiment may be applied to a heavy load vehicle such as a construction vehicle.

As shown in Fig. 1, the heavy load tire 1 is provided with a pair of bead portions 2, a carcass layer 3 that forms a frame of the heavy load tire 1, and a tread portion 4 having a ground contact surface that contacts a road surface.

The bead portion 2 includes a bead core 5 and a bead filler 6. The carcass layer 3 is extended in a troidal manner between the bead cores 5.

At least two bead cores 5 are arranged separately in the tire width direction. The bead core 5 is formed by one bead wire 8 wound several times in a ring manner. The bead core 5 supports cord tension of the carcass layer 3 generated by inner pressure of the heavy load tire 1. The bead wire 8 is coated with a rubber material.

The bead filler 6 is a rubber material for reinforcing the bead core 5. The bead filler 6 is arranged in a space formed by folding respective end portions of the carcass layer 3 at positions of the bead cores 5 toward outer sides in the tire width direction.

A belt layer 7 is arranged between the carcass layer 3 and the tread portion 4. The belt layer 7 is formed by a plurality of belt layers laminated in a tire circumferential direction. As shown in Fig. 1, the belt layer 7 includes a protection belt layer 30, a main crossing belt layer 31, and a small crossing belt layer 32. The protection belt layer 30 includes two protection belts 30A and 30B. The main crossing belt layer 31 includes two main crossing belts 31A and 31B. The small crossing belt layer 32 includes two small crossing belts 32A and 32B.

As shown in Fig. 1, the main crossing belt layer 31 is arranged next to the small crossing belt layer 32 at an outer side in a tire radial direction, and the protection belt layer 30 is arranged next to the main crossing belt layer 31 at the outer side in the tire radial direction.

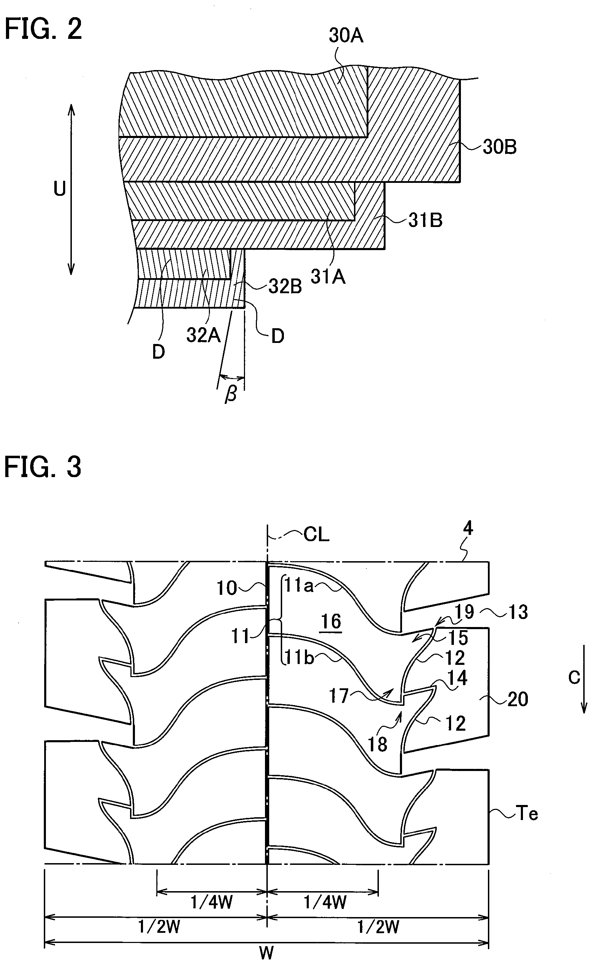

As shown in Fig. 2, an angle β between a cord D forming the small crossing belt layer 32 and the tire circumferential direction is set in a range between 4 degrees and 10 degrees. Accordingly, the small crossing belt 32 is formed as a high angle belt. An angle between a cord forming the main crossing belt layer 31 and the tire circumferential direction is set in a range between 18 degrees and 35 degrees. An angle between a cord forming the protection crossing belt layer 30 and the tire circumferential direction is set in a range between 22 degrees and 33 degrees. The angle β between the cord forming the small crossing belt layer 32 and the tire circumferential direction is the smallest compared to each of the angles relating to the main crossing belt layer 31 and the protection belt layer 30.

Further, as shown in Fig. 1, lengths in the tire width direction of the belt layers fulfill the following relations. The small crossing belt 32B is longer than the small crossing belt 32A, and is shorter than the main crossing belts 31A and 31B and the protection belts 30A and 30B. The small crossing belt 32A is the shortest among the six belt layers. The main crossing belt 31B is longer than the small crossing belts 32A and 32B, the main crossing belt 31A and the protection belt 30A, and is shorter than the protection belt 30B. The main crossing belt 31A is longer than the small crossing belts 32A and 32B, and is shorter than the main crossing belt 31B and the protection belts 30A and 30B. The protection belt 30B is the longest among the six belt layers. The protection belt 30A is longer than the small crossing belts 32A and 32B and the main crossing belt 31A, and is shorter than the main crossing belt 31B and the protection belt 30B. Here, a ratio of respective lengths is not especially limited.

In Fig. 1, although an illustration of a circumferential direction groove and the like described below is omitted, such grooves are formed in the tread portion 4. A tread width W shown in Fig. 1 denotes a length between both tread ends Te, measured along the tire width direction on a developed view of the tread. A tread half width 1/2W shown in Fig. 1 denotes a half of the length of the tread width W. In the present invention, the tread half width 1/2W is described as a length between a tire equatorial line CL and the tread end Te.

Next, the tread portion 4 will be described with reference to Fig. 3. In Fig. 3, an arrow C denotes a tire rotation direction. The tire rotation direction denotes one direction in the tire circumferential direction, and is a direction of the tire rotating when the vehicle travels forward. A tread quarter width 1/4W denotes a half of the length of the tread half width 1/2W, measured along the tire width direction from the tire equatorial line CL toward the outer side.

As shown in Fig. 3, one circumferential direction groove 10 extended along the tire circumferential direction is formed in the tread portion 4. The circumferential direction groove 10 is formed on the tire equatorial line CL. The circumferential direction groove 10 is a groove formed in a linear shape. Further, a plurality of lateral grooves 11 (lateral groove 11a and lateral groove 11b) communicated with the circumferential direction groove 10 is formed. The lateral groove 11a and the lateral groove 11b are formed to be adjacent to each other in the tire circumferential direction. Each of the lateral groove 11a and the lateral groove 11b is formed to be curved and protruded toward the tire rotation direction and is extended along the tire width direction. Each of the lateral groove 11a and the lateral groove 11b is inclined toward the tire rotation direction, from the tire equatorial line CL to the outer side in the tire width direction. Each of the lateral groove 11a and the lateral groove 11b has an inflection point in which a direction of a recess and projection toward the tire circumferential direction is changed, from the tire equatorial line CL toward the outer side in the tire width direction. Each of the lateral groove 11a and the lateral groove 11b has a projection, which is projected toward a direction opposite to the tire rotation direction, at a side of the tire equatorial line CL. Further, each of the lateral groove 11a and the lateral groove 11b has a projection, which is projected toward the tire rotation direction, at a side of the shoulder. Here, a shape of each of the lateral groove 11a and the lateral groove 11b is not limited to the shape shown in Fig. 3. Each of the lateral groove 11a and the lateral groove 11b may be extended linearly along the tire width direction. Further, the shapes of the lateral groove 11a and the lateral groove 11b may be different or may be identical as long as a kick-out end 15 has a large area as described below.

One end of the lateral groove 11a is communicated with the circumferential direction groove 10 and another end of the lateral groove 11a is communicated with a first shoulder groove 13. One end of the lateral groove 11b is communicated with the circumferential direction groove 10 and another end of the lateral groove 11b is communicated with the circumferential direction groove 12. The circumferential direction groove 12 is formed to be curved and protruded toward the direction opposite to the tire rotation direction, from a side of the tire equatorial line CL to the outer side in the tire width direction. In other words, the circumferential direction groove 12 is inclined toward the direction opposite to the tire rotation direction, from the side of the tire equatorial line CL to the outer side in the tire width direction. Further, the circumferential direction groove 12 has an inflection point in which a direction of a recess and projection toward the tire width direction is changed, from the side of the tire equatorial line CL to the outer side in the tire width direction. The tire circumferential direction groove 12 is formed to be curved and protruded toward the inner side in the tire width direction, at the side of the tire equatorial line CL. Further, the tire circumferential direction groove 12 is formed to be curved and protruded toward the outer side in the tire width direction, at the side of the shoulder. A plurality of the circumferential direction grooves 12 is formed along the tire circumferential direction. One end 18 of the circumferential direction groove 12 is communicated with the lateral groove 11b and another end 19 of the circumferential direction groove 12 is terminated in the first shoulder groove 13. The circumferential direction groove 12 is formed to be curved in a region at the outer side in the tire width direction with respect to the one end 18. In other words, the circumferential direction groove 12 is formed not to be curved in a region at the inner side in the tire width direction with respect to the one end 18. Further, the one end 18 of the circumferential direction groove 12 is arranged at the outer side in the tire width direction with respect to a position in the tire width direction corresponding to the end portion of the belt layer having the smallest angle between the cord and the tire circumferential direction. In the present embodiment, the belt layer having the smallest angle between the cord and the tire circumferential direction corresponds to the small crossing belts 32A and 32B. Thus, the one end 18 of the circumferential direction groove 12 is arranged at the outer side in the tire width direction with respect to a position in the tire width direction corresponding to the end portions of the small crossing belts 32A and 32B. Further, it is preferable that the one end 18 of the circumferential direction groove 12 is arranged at the outer side in the tire width direction with respect to the position in the tire width direction corresponding to the end portion of the small crossing belt 32B.

As shown in Fig. 3, a block 16 is defined by the circumferential direction groove 10, the lateral groove 11a, the lateral groove 11b, the circumferential direction groove 12, and the first shoulder groove 13. A plurality of the blocks 16 is formed along the tire circumferential direction across a center region and a shoulder region of the tread portion 4. The center region denotes a region from the tire equatorial line CL to the tread quarter width 1/4W. The shoulder region denotes a region at the outer side in the tire width direction with respect to the center region. Here, the lateral groove 11a is communicated with the first shoulder groove 13, however it is not limited to this. The lateral groove 11a may be communicated with the circumferential direction groove 12. In such a case, the first shoulder groove 13 is formed to be shorter. As shown in Fig. 3, the first shoulder groove 13 and a second shoulder groove 14 are formed in the shoulder region of the tread portion 4. The first shoulder groove 13 is opened to the tread end Te and is communicated with the lateral groove 11a. The second shoulder groove 14 is extended in a direction from the tire equatorial line CL toward the outer side in the tire width direction. The second shoulder groove 14 is inclined toward the direction opposite to the tire rotation direction. Here, the second shoulder groove 14 may be formed as a groove not having a component of the tire circumferential direction. That is, the second shoulder groove 14 may be formed parallel to the tire width direction.

As shown in Fig. 3, the second shoulder groove 14 is formed between the one end 18 and the another end 19 of the circumferential direction groove 12. The second shoulder groove 14 is communicated with a portion of the circumferential direction groove 12 between the one end 18 and the another end 19 and is terminated in a shoulder block 20. The second shoulder groove 14 is not opened to the tread end Te. With the first shoulder groove 13 and the second shoulder groove 14, the rigidity of each block is increased. Here, in Fig. 3, the second shoulder groove 14 is terminated in the shoulder block 20, however it is not limited to this. The second shoulder groove 14 may be opened to the tread end Te, similar to the first shoulder groove 13. As shown in Fig. 3, the circumferential direction groove 12 is communicated with both of the first shoulder groove 13 and the second shoulder groove 14.

Next, functions and effects of the heavy load tire 1 according to the present embodiment will be described. Generally, when a tire rotates, force in a tire rotation direction (driving force) is generated in a region adjacent to a tire equatorial line and force in a direction opposite to the tire rotation direction (braking force) is generated in a region adjacent to an end portion in a tire width direction. Thus, shear force is generated in a region around a boundary between both of the regions described above. A block is deformed by the shear force when the tire rotates, and thereby a wear amount at a step-in end is decreased and a wear amount at a kick-out end is increased. That is, a wear difference is generated between both ends of the block in the tire circumferential direction, and thereby a wear lifetime of the tire is shortened.

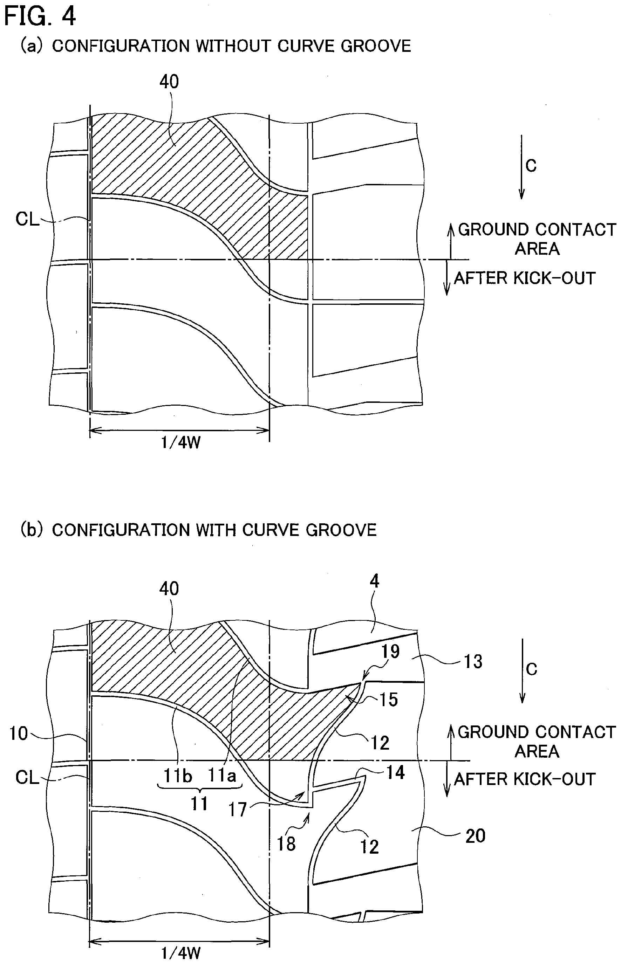

In the present invention, the block 16 is defined by the circumferential direction groove 10, the lateral groove 11a, the lateral groove 11b, and the circumferential direction groove 12. The circumferential direction groove 12 is formed to be curved and protruded toward the direction opposite to the tire rotation direction, from the tire equatorial line CL to the outer side in the tire width direction. With this, the kick-out end 15, which has a large area toward the outer side in the tire width direction, is formed near the boundary between the center region and the shoulder region. The lateral force is applied to the block 16 when turning, and the shear force is increased due to the lateral force. However, since the kick-out end 15 has a large area, the heavy load tire 1 can disperse the shear force applied to the kick-out end 15. That is, when a configuration with the curve groove (circumferential direction groove 12) shown in Fig. 4(b) is compared to a configuration without the curve groove shown in Fig. 4(a), since a kick-out side 40 (leading kick-out portion) has a large area, the heavy load tire 1 can disperse the shear force applied to the kick-out side 40. In this way, the heavy load tire 1 can decrease a component of the lateral force in the shear force, and thereby the wear difference between a step-in end 17 and the kick-out end 15 can be decreased. Consequently, the uneven wear resistance is improved.

Further, in the present embodiment, the one end 18 of the circumferential direction groove 12 is arranged at the outer side in the tire width direction with respect to the position in the tire width direction corresponding to the end portion of the belt layer having the smallest angle between the cord and the tire circumferential direction. With this, the uneven wear resistance around a position far away from the tire equatorial line CL by a distance of the tread quarter width 1/4W is improved.

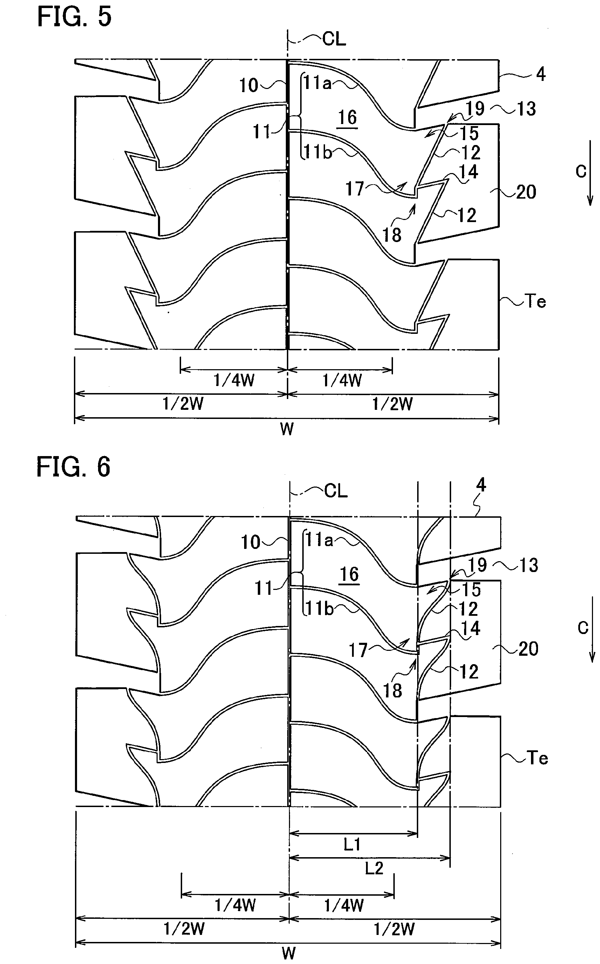

In the present invention, the circumferential direction groove 12 is formed to be curved. In the illustration of Fig. 5, not forming part of the present invention, the circumferential direction groove 12 is formed linearly to be inclined toward the direction opposite to the tire rotation direction, from the tire equatorial line CL to the outer side in the tire width direction. However, when the circumferential direction groove 12 is formed to be curved, a sharp angle is not formed, and thereby the component of the lateral force in the shear force is largely decreased. Therefore, in the present invention the circumferential direction groove 12 is formed to be curved. In the present invention, the kick-out end 15 having a large area is formed in each block 16.

As described above, when the tire rotates, the shear force is generated. When the tire is mounted to an axle to which the braking force is applied, the shear force is further increased by the braking force applied to the tire. In order to decrease such shear force, it is preferable to increase the driving force described above. Thus, in the present embodiment, each of the lateral groove 11a and the lateral groove 11b is inclined toward the tire rotation direction from the tire equatorial line CL. With this, the driving force is increased, and the shear force is decreased.

A length L1 shown in Fig. 6 denotes a length between the tire equatorial line CL and the one end 18 of the circumferential direction groove 12. A length L2 denotes a length between the tire equatorial line CL and the another end 19 (terminal) of the circumferential direction groove 12. The length L1 is preferably set to 0.25W or more and less than 0.4W. The length L2 is preferably set to more than the length L1 and less than 0.4W. As shown in Fig. 6, the block 16 includes a region between a position far away from the tire equatorial line CL by the length L1 and a position far away from the tire equatorial line CL by the length L2, and the area of the region is asymptotically increased. Specifically, the region in which the area thereof is asymptotically increased is formed such that the area is asymptotically increased toward the outer side in the tire width direction and toward the direction opposite to the tire rotation direction. With this, the kick-out end 15 has a large area, and thereby the heavy load tire 1 can disperse the shear force applied to the kick-out end 15.

### [Reference Signs List]

1: heavy load tire
2: bead portion
3: carcass layer
4: tread portion
5: bead core
6: bead filler
7: belt layer
8: bead wire
10: circumferential direction groove
11: lateral groove
12: circumferential direction groove
13: first shoulder groove
14: second shoulder groove
15: kick-out end
16: block
17: step-in end
20: shoulder block
30: protection belt layer
31: main crossing belt layer
32: small crossing belt layer
Te: tread end

## Claims

1. A heavy load tire comprising:
a first circumferential direction groove (10) extended along a tire circumferential direction;
a second circumferential direction groove (12) formed at an outer side in a tire width direction with respect to the first circumferential direction groove (10);
a plurality of lateral grooves (11) extended along the tire width direction;
a block (16) defined by the first circumferential direction groove (10), the second circumferential direction groove (12), a plurality of the lateral grooves (11); and
a plurality of belt layers (7);
and the second circumferential direction groove (12) is arranged at the outer side in the tire width direction with respect to a position in the tire width direction corresponding to an end portion of the belt layer having the smallest angle between a cord, which forms the belt layer, and the tire circumferential direction,
**characterized in that** the second circumferential direction groove (12) is formed to be curved and protruded toward a direction opposite to a tire rotation direction, from a side of a tire equatorial line to the outer side in the tire width direction and has an inflection point in which a direction of a recess and projection toward the tire width direction is changed, from the side of the tire equatorial line to the outer side in the tire width direction.

2. The heavy load tire according to claim 1, wherein at least one of the lateral grooves (11) is inclined toward the tire rotation direction, from the side of the tire equatorial line to the outer side in the tire width direction.

3. The heavy load tire according to claim 1 or 2, further comprising a first shoulder groove opened to a tread end and extended along the tire width direction,
wherein the second circumferential direction groove (12) is communicated with the first shoulder groove.

4. The heavy load tire according to claim 3, wherein the first shoulder groove is communicated with at least one of the lateral grooves (11).

5. The heavy load tire according to any one of claims 1 to 4, further comprising a second shoulder groove communicated with a portion of the second circumferential direction groove (12) between one end and another end of the second circumferential direction groove (12),
wherein the second shoulder groove is inclined toward the direction opposite to the tire rotation direction, from the side of the tire equatorial line to the outer side in the tire width direction.

6. The heavy load tire according to any one of claims 1 to 5, wherein, as a length W is defined by a length between one end and another end of tread ends in the tire width direction, a length L1 is defined by a length between the tire equatorial line and one end of the second circumferential direction groove (12), and a length L2 is defined by a length between the tire equatorial line and another end of the second circumferential direction groove (12),
the length L1 is 0.25W or more and less than 0.4W, and
the length L2 is more than the length L1 and less than 0.4W.

7. The heavy load tire according to any one of claims 1 to 6, wherein the belt layer (32) having the smallest angle is a first belt layer (32B) formed at an innermost side in a tire radial direction, or a second belt layer (32A) formed next to the first belt layer (32B) at an outer side in the tire radial direction, and
wherein the first belt layer (32B) or the second belt layer (32A) is smaller in a width in the tire width direction than other belt layer.

## Patentansprüche

1. Schwerlastreifen, der Folgendes umfasst:
eine erste Umfangsrichtungsrille (10), die sich entlang einer Reifenumfangsrichtung erstreckt;
eine zweite Umfangsrichtungsrille (12), die an einer in einer Reifenbreitenrichtung äußeren Seite in Bezug auf die erste Umfangsrichtungsrille (10) gebildet ist;
eine Vielzahl von seitlichen Rillen (11), die sich entlang der Reifenbreitenrichtung erstrecken;
einen Block (16), der durch die erste Umfangsrichtungsrille (10), die zweite Umfangsrichtungsrille (12), eine Vielzahl der seitlichen Rillen (11) definiert wird; und
eine Vielzahl von Gürtellagen (7);
und die zweite Umfangsrichtungsrille (12) ist an der in der Reifenbreitenrichtung äußeren Seite in Bezug auf eine Position in der Reifenbreitenrichtung angeordnet, die einem Endabschnitt der Gürtellage entspricht, der den kleinsten Winkel zwischen einem Kord, der die Gürtellage bildet, und der Reifenumfangsrichtung aufweist,
**dadurch gekennzeichnet, dass** die zweite Umfangsrichtungsrille (12) so geformt ist, dass sie gekrümmt ist und vorspringt, hin zu einer Richtung, entgegengesetzt zu einer Reifenrotationsrichtung, von einer Seite einer Reifenäquatoriallinie zu der in der Reifenbreitenrichtung äußeren Seite, und einen Wendepunkt aufweist, in dem eine Richtung einer Vertiefung und eines Vorsprungs hin zu der Reifenbreitenrichtung, von der Seite der Reifenäquatoriallinie zu der in der Reifenbreitenrichtung äußeren Seite, geändert wird.

2. Schwerlastreifen nach Anspruch 1, wobei mindestens eine der seitlichen Rillen (11) hin zu der Reifenrotationsrichtung, von der Seite der Reifenäquatoriallinie zu der in der Reifenbreitenrichtung äußeren Seite, geneigt ist.

3. Schwerlastreifen nach Anspruch 1 oder 2, der ferner eine erste Schulterrille umfasst, die zu einem Laufflächenende geöffnet ist und sich entlang der Reifenbreitenrichtung erstreckt,
wobei die zweite Umfangsrichtungsrille (12) mit der ersten Schulterrille in Verbindung steht.

4. Schwerlastreifen nach Anspruch 3, wobei die erste Schulterrille mit mindestens einer der seitlichen Rillen (11) in Verbindung steht.

5. Schwerlastreifen nach einem der Ansprüche 1 bis 4, der ferner eine zweite Schulterrille umfasst, die mit einem Abschnitt der zweiten Umfangsrichtungsrille (12) zwischen einem Ende und einem anderen Ende der zweiten Umfangsrichtungsrille (12) in Verbindung steht,
wobei die zweite Schulterrille hin zu der Richtung, entgegengesetzt zu der Reifenrotationsrichtung, von der Seite der Reifenäquatoriallinie zu der in der Reifenbreitenrichtung äußeren Seite, geneigt ist.

6. Schwerlastreifen nach einem der Ansprüche 1 bis 5, wobei, da eine Länge W durch eine Länge zwischen einem Ende und einem anderen Ende von Laufflächenenden in der Reifenbreitenrichtung definiert wird, eine Länge L1 durch eine Länge zwischen der Reifenäquatoriallinie und einem Ende der zweiten Umfangsrichtungsrille (12) definiert wird und eine Länge L2 durch eine Länge zwischen der Reifenäquatoriallinie und einem anderen Ende der zweiten Umfangsrichtungsrille (12) definiert wird,
die Länge L1 0,25 W oder mehr und weniger als 0,4 W beträgt und
die Länge L2 mehr als die Länge L1 und weniger als 0,4 W beträgt.

7. Schwerlastreifen nach einem der Ansprüche 1 bis 6, wobei die Gürtellage (32), die den kleinsten Winkel aufweist, eine erste Gürtellage (32B), die an einer in einer Reifenradialrichtung innersten Seite geformt ist, oder eine zweite Gürtellage (32A), die neben der ersten Gürtellage (32B) an einer in der Reifenradialrichtung äußersten Seite geformt ist, ist, und
wobei die erste Gürtellage (32B) oder die zweite Gürtellage (32A) in einer Breite in der Reifenbreitenrichtung kleiner ist als die andere Gürtellage.

## Revendications

1. Pneumatique pour charges lourdes comprenant :
une première rainure de direction circonférentielle (10) s'étendant le long d'une direction circonférentielle du pneumatique ;
une seconde rainure de direction circonférentielle (12) formée sur un côté extérieur dans une direction de largeur de pneumatique par rapport à la première rainure de direction circonférentielle (10) ;
une pluralité de rainures latérales (11) s'étendant le long de la direction de la largeur du pneumatique ;
un bloc (16) défini par la première rainure de direction circonférentielle (10), la deuxième rainure de direction circonférentielle (12), une pluralité des rainures latérales (11) ; et
une pluralité de couches de ceinture (7) ;
et la deuxième rainure de direction circonférentielle (12) est agencée sur le côté extérieur dans la direction de la largeur du pneumatique par rapport à une position dans la direction de la largeur du pneumatique correspondant à une partie d'extrémité de la couche de ceinture ayant le plus petit angle entre un câble qui forme la couche de ceinture et la direction circonférentielle du pneumatique,
**caractérisé en ce que** la deuxième rainure de direction circonférentielle (12) est formée pour être incurvée et faire saillie vers une direction opposée à une direction de rotation du pneumatique, depuis un côté d'une ligne équatoriale du pneumatique vers le côté extérieur dans la direction de la largeur du pneumatique et présente un point d'inflexion dans lequel une direction d'un évidement et d'une projection vers la direction de la largeur du pneumatique est modifiée, depuis le côté de la ligne équatoriale du pneumatique vers le côté extérieur dans le sens de la largeur du pneumatique.

2. Pneumatique pour charges lourdes selon la revendication 1, dans lequel au moins une des rainures latérales (11) est inclinée vers le sens de rotation du pneumatique, du côté de la ligne équatoriale du pneumatique vers le côté extérieur dans le sens de la largeur du pneumatique.

3. Pneumatique pour charges lourdes selon la revendication 1 ou 2, comprenant en outre une première rainure d'épaulement ouverte sur une extrémité de la bande de roulement et s'étendant le long de la direction de la largeur du pneumatique,
dans lequel la deuxième rainure de direction circonférentielle (12) communique avec la première rainure d'épaulement.

4. Pneumatique pour charges lourdes selon la revendication 3, dans lequel la première rainure d'épaulement est en communication avec au moins l'une des rainures latérales (11).

5. Pneumatique pour charges lourdes selon l'une quelconque des revendications 1 à 4, comprenant en outre une deuxième rainure d'épaulement communiquant avec une partie de la deuxième rainure de direction circonférentielle (12) entre une extrémité et une autre extrémité de la deuxième rainure de direction circonférentielle (12),
dans lequel la deuxième rainure d'épaulement est inclinée vers la direction opposée à la direction de rotation du pneumatique, du côté de la ligne équatoriale du pneumatique vers le côté extérieur dans la direction de la largeur du pneumatique.

6. Pneumatique pour charges lourdes selon l'une quelconque des revendications 1 à 5, dans lequel, comme une longueur W est définie par une longueur entre une extrémité et une autre extrémité des extrémités de la bande de roulement dans le sens de la largeur du pneumatique, une longueur L1 est définie par une longueur entre la ligne équatoriale du pneumatique et une extrémité de la deuxième rainure de direction circonférentielle (12), et une longueur L2 est définie par une longueur entre la ligne équatoriale du pneumatique et une autre extrémité de la deuxième rainure de direction circonférentielle (12),
la longueur L1 est supérieure ou égale à 0,25 W et inférieure à 0,4 W, et
la longueur L2 est supérieure à la longueur L1 et inférieure à 0,4 W.

7. Pneumatique pour charges lourdes selon l'une quelconque des revendications 1 à 6, dans lequel la couche de ceinture (32) présentant le plus petit angle est une première couche de ceinture (32B) formée sur un côté le plus à l'intérieur dans une direction radiale du pneumatique, ou une deuxième couche de ceinture couche (32A) formée à côté de la première couche de ceinture (32B) sur un côté extérieur dans la direction radiale du pneumatique, et
dans lequel la première couche de ceinture (32B) ou la deuxième couche de ceinture (32A) est plus petite en largeur dans la direction de la largeur du pneumatique que l'autre couche de ceinture.
